**Europäisches Patentamt**

**European Patent Office**

**Office européen des brevets**

(11) Publication number: **0 247 122 B1**

(12) # EUROPEAN PATENT SPECIFICATION

(45) Date of publication of patent specification:
08.05.91 Bulletin 91/19

(51) Int. Cl.⁵: **B62D 33/06**

(21) Application number: **86906895.7**

(22) Date of filing: **26.11.86**

(86) International application number:
**PCT/GB86/00722**

(87) International publication number:
**WO 87/03259 04.06.87 Gazette 87/12**

(54) **IMPROVEMENTS IN OFF-THE-ROAD VEHICLES.**

(30) Priority: 30.11.85 GB 8529531
30.11.85 GB 8529532

(43) Date of publication of application:
02.12.87 Bulletin 87/49

(45) Publication of the grant of the patent:
08.05.91 Bulletin 91/19

(84) Designated Contracting States:
AT BE DE FR GB IT NL SE

(56) References cited:
DE-A- 1 780 211
DE-B- 1 107 526
US-A- 3 682 464
US-H- 463 671

(56) References cited:
Patent Abstracts of Japan, volume 6, no. 267
(M182) (1145) 25 December 1982
Patent Abstracts of Japan, 7614 M 77
See also references of WO8703259

(73) Proprietor: GKN Sankey Limited
P.O. Box 20, Hadley Castle Works
Telford, Shropshire TF1 4RE (GB)

(72) Inventor: BENSON, John, Alan 3 Tithe Road
Wood End Wootton
Beds. MK43 9BE (GB)
Inventor: DYER, Michael, John
1 Glebe Way Houghton Conquest
Bedford MK45 3JX (GB)

(74) Representative: Thorpe, Brian et al
Forrester & Boehmert Widenmayerstrasse 4
W-8000 München 22 (DE)

## Description

This invention relates to an off-the-road vehicle, such as an agricultural tractor, having a suspended cab. Throughout this specification and claims the term "off-the-road vehicle" will be understood to refer to a vehicle which is intended primarily for use in off-the-road conditions although it should be appreciated that such a vehicle will of course also be capable of use on roads.

Traditionally off-the-road vehicles such as agricultural tractors have been constructed so that there is no suspension between the tractor wheels and the tractor chassis, the only compliance in the suspension being provided by the tyres. It has been known to provide some ride comfort for the driver of an agricultural tractor by providing a spring seat. This has been generally unsatisfactory since the drivers' position relative to the vehicle controls will vary as the vehicle traverses rough ground, leading to a possible impairment or loss of control of the tractor.

This has been overcome at least in part by providing a suspended cab structure, mounting cab controls, for the driver to protect him from noise, weather and also to give roll-over protection. Known suspended cabs have been mounted to the tractor chassis by complex and expensive mounting arrangements designed to isolate the driver from as many of the kinds of movement experienced by a cab as possible.

DE-A-1780211 describes vehicle cab in which the front end of the cab is mounted on a rubber-metal bearing to be tiltable transversely to the longitudinal direction of the vehicle while the rear of the cab is mounted on a shock absorber with an associated spring. US-B-463671 describes a tractor cab mounted on four resilient mountings.

The range of movements which can be experienced by a suspended cab of a tractor comprises lateral, longitudinal, vertical, roll, pitch and yaw movements. Of the above range of movements, it is vertical and to some extent pitch movements which cause substantial discomfort. Pitch exhibits itself as a tendency for the driver to be thrown from his seat and to collide with the back of his seat. Vertical movement may result in motion sickness.

It is an object of the present invention to provide an improved suspended cab arrangement on an off-the-road vehicle.

In accordance with the invention there is provided an off-the-road vehicle comprising a cab and a chassis wherein the cab is suspended relative to the chassis, characterised in that the cab is pivotally mounted on the chassis about a pivot axis extending transversely of the cab at the forward end thereof, the pivot axis being located between the front and rear wheels of the vehicle and in a horizontal plane in or adjacent to a horizontal plane containing the centre of gravity of the cab, the cab also being connected to the vehicle chassis by compressible gas suspension means remote from the forward end of the cab.

The compressible gas suspension means is preferably connected beween the chassis and the rearward end of the cab and conveniently comprises a pair of gas suspension units, each one of which is connected respectively between a rearward part of the cab and the vehicle chassis. It is preferred that the compressible gas suspension means comprises a rolling diaphragm gas spring rigidly connected at each of its ends between the cab and the chassis.

The pivot axis of the cab may be fixed relative to the chassis or it may be movable relative to the chassis. In the latter embodiment the pivot axis of the cab is movable longitudinally of the chassis and may be contained in a linkage itself pivotally mounted to the chassis whereby said pivot axis is movable through a predetermined distance longitudinally of the chassis about the pivotal mounting of the linkage. Such pivotal mounting of the linkage preferably comprises a torsional mounting providing resistance against displacement of the pivot axis of the cab.

Preferably, the controls for the tractor are mounted in the cab, and so relative movement between the driver and his controls is avoided. However, certain controls such as foot pedals could be mounted on the chassis near the forward end of the cab so that although these controls are mounted on the chassis the amount of displacement experienced by the cab relative to these controls will be small. Mounting of all the controls on the cab has the great advantage that all the relative movement is avoided and noise suppression is increased.

Other features of the invention will become apparent from the following description given herein solely by way of example with reference to the accompanying drawings wherein :

Figure 1 is a diagrammatic side elevation of an agricultural tractor constructed in accordance with the invention, and

Figure 2 is a similar diagrammatic side elevation of an agricultural tractor showing an alternative embodiment of the pivot axis of the cab.

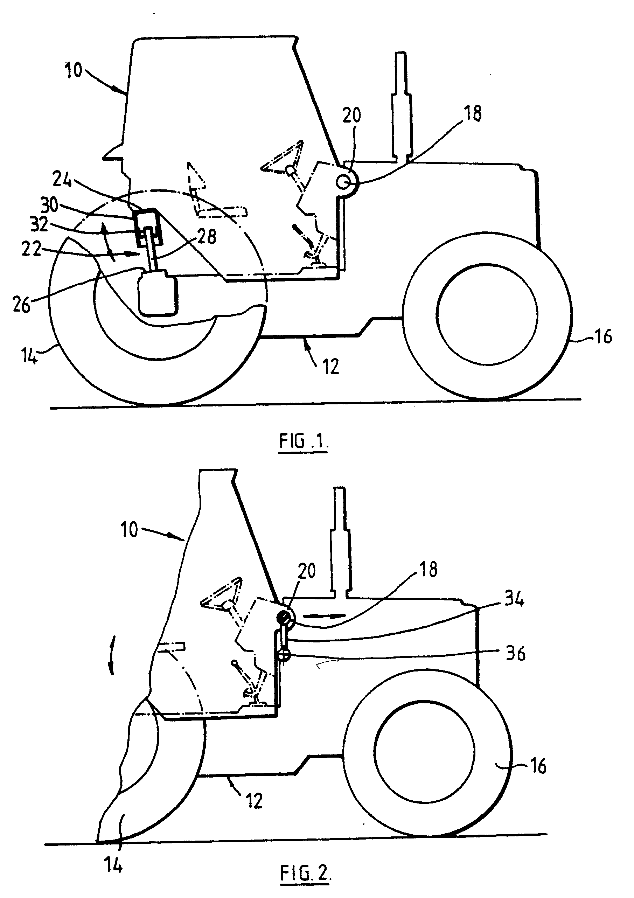

In Figure 1 of the drawings there is shown an off-the-road vehicle comprising an agricultural tractor having a cab 10 mounted on a chassis 12 in accordance with the invention. The chassis provides mountings for a conventional engine and gearbox (not illustrated) operable to drive rear wheels 14, or rear wheels 14 and front wheels 16, of the tractor. The rear wheels 14 and the front wheels 16 are mounted on the chassis in a conventional manner without any compliant suspension between the wheel mountings and the chassis.

However, in accordance with the invention, the cab 10 is pivotally mounted on the chassis 12 about a pivot axis 18 extending transversely of the cab at the forward end thereof with the pivot axis located between the tractor wheels 14, 16 and in a horizontal plane in or adjacent to a horizontal plane containing the centre of gravity of the cab 10. In this embodiment, the pivot axis 18 of the cab 10 is fixed relative to the chassis 12 and conveniently comprises a pivot pin rigidly secured to the rearward end of the engine housing to which the cab is mounted by bearing lugs 20 projecting forwardly of the forward end of the cab proper.

Also in accordance with the invention, the cab 10 is connected to the chassis 12 by compressible gas suspension means at a location remote from the forward end of the cab. As illustrated in Figure 1, such compressible gas suspension means comprises a pair of rolling diaphragm gas springs 22 each one of which is connected respectively between a rearward corner 24 of the cab and a mounting pad 26 on the chassis. Each one of the gas springs 22 comprises a lower piston 28 rigidly mounted at its lower end to the pad 26 and an upper gas cylinder 30 rigidly mounted at its upper end to the said cab corner 24. The upper end of the piston 28 is connected to the lower surface of an elastomeric rolling diaphragm 32, the annular periphery of which is connected to the cylinder 30 whereby movement of the piston into the cylinder will cause the diaphragm to roll and compress the gas contained within the cylinder and within a gas reservoir (not shown) carried by the tractor, such reservoir communicating with the cylinder. Means (not illustrated) are provided on the tractor for connecting a compressed gas supply to the cylinder 30 through a port therein (or to the said gas reservoir) for establishing a predetermined gas pressure within the cylinder and reservoir system.

Thus, in use, the cab 10 is compliantly mounted on the chassis 12 for pivotting movement about the pivot axis 18 and is resiliently mounted on the chassis through the gas springs 22. The rolling diaphragm construction of the gas springs 22 will accommodate any misalignment between the piston 28 and cylinder 30 sufficient to permit the springs to be connected rigidly between the cab corners 24 and mounting pads 26 as aforesaid. It is found that, due to the pivot axis being in or adjacent to the horizontal plane containing the centre of gravity of the cab, the suspension does not deflect under braking or accelerating forces nor when the operator steps into or out of the cab although it is necessary to provide some automatic levelling arrangement to compensate for differing driver's weights, such levelling arrangement conveniently comprising a levelling valve and compressor for establishing the said predetermined gas pressure within the spring cylinders 30.

As shown in Figure 1, there is provided a driver's seat together with a control column mounting a steering assembly. Control linkages from the control column, a gear selector, and clutch and brake pedals pass from the cab to the operative parts on the chassis adjacent the forward lower end of the cab. It has been found convenient to arrange most of the driver controls to move with the cab, relative motion between the chassis and the cab being accommodated by hydraulic hoses or flexible cables. However, the gear selectors and the hand brake may not move with the cab but, if they are positioned close to the forward end thereof, the relative motion between such controls and the cab is small.

Referring now to Figure 2 of the drawings, wherein like reference numerals refer to like parts already described with reference to Figure 1, there is shown an agricultural tractor having a suspended cab 10 similar to that shown in Figure 1 but wherein the pivot axis 18 of the cab 10 is movable relative to the chassis 12. As illustrated, said pivot axis 18 may comprise a similar pivot pin and bearing lug arrangement to that described with reference to Figure 1 but the pivot pin itself is carried at the upper end of a link arm 34 itself pivotally mounted to the chassis at its lower end by means of a torsion bar or elastomeric mounting 36. The neutral position of the link arm 34 is shown in Figure 2 and any displacement from this neutral position is resisted by the torsion bar or elastomeric mounting 36 of the lower end of the arm 34 whereby the pivot axis 18 is movable through a predetermined distance longitudinally of the chassis 12 whilst still remaining in or adjacent to the horizontal plane containing the centre of gravity of the cab 10. This relative movement of the pivot axis 18 of the cab 10 relative to the chassis 12 is found, in some off-the-road conditions, to give increased driver comfort and, in such a construction, it is found that the rolling diaphragm spring construction also accommodates the limited longitudinal movement of the cab 10 relative to the chassis 12.

## Claims

1. An off-the-road vehicle comprising a cab (10) and a chassis (12) wherein the cab is suspended relative to the chassis, characterised in that the cab (10) is pivotally mounted on the chassis (12) about a pivot axis (18) extending transversely of the cab at the forward end thereof, the pivot axis being located between the front and rear wheels (16 and 14) of the vehicle and in a horizontal plane in or adjacent to a horizontal plane containing the centre of gravity of the cab, the cab also being connected to the vehicle chassis by compressible gas suspension means (22) remote from the forward end of the cab.

2. A vehicle as claimed in Claim 1, characterised in that the compressible gas suspension means (22) is connected between the chassis (12) and the rearward end of the cab (10).

3. A vehicle as claimed in either one of Claims 1 or 2, characterised in that the compressible gas suspension means (22) comprises a pair of gas suspension units each one of which is connected respectively between a rearward part of the cab (10) and the chassis (12).

4. A vehicle as claimed in any one of Claims 1 to 3, characterised in that the compressible gas suspension means (22) comprises a rolling diaphragm gas spring (22) rigidly connected at each of its ends between the cab (10) and the chassis (12).

5. A vehicle as claimed in any one of Claims 1 to 4, characterised in that the pivot axis (18) of the cab (10) is fixed relative to the chassis (12).

6. A vehicle as claimed in any one of Claims 1 to 4, characterised in that the pivot axis (18) of the cab (10) is movable relative to the chassis (12).

7. A vehicle as claimed in Claim 6, characterised in that the pivot axis (18) of the cab (10) is movable longitudinally of the chassis (12).

8. A vehicle as claimed in Claim 7, characterised in that the pivot axis (18) of the cab (10) is contained in a linkage (34) itself pivotally mounted to the chassis (12) whereby said pivot axis (18) is movable through a predetermined distance longitudinally of the chassis about the pivotal mounting of the linkage.

9. A vehicle as claimed in Claim 8, characterised in that the pivotal mounting of the linkage (34) comprises a torsional mounting (36) providing resistance against displacement of the pivot axis (18) of the cab (10).

## Ansprüche

1. Geländegängiges Fahrzeug mit einer Fahrerkabine (10) und einem Fahrgestell (12), wobei die Fahrerkabine gegenüber dem Fahrgestell gefedert ist, dadurch gekennzeichnet, daß die Fahrerkabine (10) an dem Fahrgestell (12) um eine Schwenkachse (18) schwenkbar befestigt ist, die sich an dem vorderen Fahrerkabinenende quer zu der Fahrerkabine erstreckt und zwischen den Vorder- und Hinterrädern (16 und 14) des Fahrzeugs in einer Horizontalebene angeordnet ist, die in oder nahe einer den Schwerpunkt der Fahrerkabine aufweisenden Horizontalebene Liegt, wobei die Fahrerkabine außerdem durch von dem vorderen Fahrerkabinenende entfernt angeordnete Druckgasgederungsmittel (22) an dem Fahrgestell befestigt ist.

2. Fahrzeug nach Anspruch 1, dadurch gekennzeichnet, daß die Druckgasfederungsmittel (22) zwischen dem Fahrgestell (12) und dem hinteren Ende der Fahrerkabine (10) angebracht sind.

3. Fahrzeug nach Anspruch 1 oder 2, dadurch gekennzeichnet, daß die Druckgasfederungsmittel (22) eine Paar Gasfederungseinheiten aufweisen, die jeweils zwischen einem hinteren Teil der Fahrerkabine (10) und dem Fahrgestell (12) angebracht sind.

4. Fahrzeug mach einem der Ansprüche 1 bis 3, dadurch gekennzeichnet, daß die Druckgasfederungsmittel (22) eine Gas-Rollmembranfeder (22) aufweisen, die an ihren beiden Enden starr zwischen der Fahrerkabine (10) und dem Fahrgestell (12) befestigt ist.

5. Fahrzeug nach einem der Ansprüche 1 bis 4, dadurch gekennzeichnet, daß die Schwenkachse (18) der Fahrerkabine (10) gegenüber dem Fahrgestell (12) feststehend angeordnet ist.

6. Fahrzeug nach einem der Ansprüche 1 bis 4, dadurch gekennzeichnet, daß die Schwenkachse (18) der Fahrerkabine (10) gegenüber dem Fahrgestell (12) bewegbar angeordnet ist.

7. Fahrzeug nach Anspruch 6, dadurch gekennzeichnet, daß die Schwenkachse (18) der Fahrerkabine (10) in Längsrichtung des Fahrgestells (12) bewegbar ist.

8. Fahrzeug nach Anspruch 7, dadurch gekennzeichnet, daß die Schwenkachse (18) der Fahrerkabine (10) an einem Gestänge (34) angeordnet ist, das selbst schwenkbar an dem Fahrgestell (12) befestigt ist, wobei die Schwenkachse (18) über eine vorbestimmte Distanz in Längsrichtung des Fahrgestells um die Schwenkbefestigungsmittel des Gestänges beweglich ist.

9. Fahrzeug nach Anspruch 8, dadurch gekennzeichnet, daß die Schwenkbefestigungsmittel des Gestänges (34) Torsionsbefestigungsmittel (36) aufweisen, die gegen eine Verlagerung der Schwenkachse (18) des Fahrerkabine (10) Widerstand leisten.

## Revendications

1. Véhicule tout-terrain comprenant une cabine (10) et un châssis (12), dans lequel la cabine est suspendue par rapport au châssis, caractérisé en ce que la cabine (10) est montée oscillante sur le châssis (12) pour tourner autour d'un axe d'oscillation (18) qui s'étend transversalement à la cabine à l'extrémité avant de celle-ci, l'axe d'oscillation étant placé entre les roues avant et arrière (16 et 14) du véhicule, et dans le plan horizontal qui contient le centre de gravité de la cabine ou à proximité de ce plan horizontal, la cabine étant aussi reliée au châssis du véhicule par des moyens de suspension à gaz compressible (22) placés à distance de l'extrémité avant de la cabine.

2. Véhicule selon la revendication 1, caractérisé en ce que les moyens de suspension à gaz compressible (22) sont intercalés entre le châssis (12) et l'extrémité arrière de la cabine (10).

3. Véhicule selon une quelconque des revendications 1 et 2, caractérisé en ce que les moyens de suspension à gaz compressible (22) comprennent deux unités de suspension à gaz dont chacune est intercalée entre une partie arrière de la cabine (10) et le châssis (12).

4. Véhicule selon une quelconque des revendications 1 à 3, caractérisé en ce que les moyens de suspension à gaz compressible (22) comprennent un ressort à gaz à membrane roulante (22) qui est intercalé entre la cabine (10) et le châssis (12) et relié rigidement à ces deux éléments à ses extrémités.

5. Véhicule selon une quelconque des revendications 1 à 4, caractérisé en ce que l'axe d'oscillation (18) de la cabine (10) est fixe par rapport au châssis (12).

6. Véhicule selon une quelconque des revendications 1 à 4, caractérisé en ce que l'axe d'oscillation (18) de la cabine (10) est mobile par rapport au châssis (12).

7. Véhicule selon la revendication 6, caractérisé en ce que l'axe d'oscillation (18) de la cabine (10) est mobile dans la direction longitudinale du châssis (12).

8. Véhicule selon la revendication 7, caractérisé en ce que l'axe d'oscillation (18) de la cabine (10) est contenu dans une biellette (34) qui est elle-même articulée sur le châssis (12), de sorte que ledit axe d'oscillation (18) peut se déplacer d'une distance prédéterminée selon la longueur du châssis, en tournant autour du support d'artiulation de la biellette.

9. Véhicule selon la revendication 8, caractérisé en ce que l'articulation de la biellette (34) comprend un support de torsion (36) qui oppose une résistance au déplacement de l'axe d'oscillation (18) de la cabine (10).

FIG.1.

FIG.2.